# EUROPÄISCHE PATENTSCHRIFT

(11) **EP 4 241 115 B1**
(45) Veröffentlichungstag und Bekanntmachung des Hinweises auf die Patenterteilung: **10.09.2025**
(21) Anmeldenummer: 21806210.7
(22) Anmeldetag: 04.11.2021
(51) Int. Cl.: G01S 7/48, G01S 17/931, G06F 18/25, G06V 20/58

(54) **VERFAHREN UND SYSTEM ZUR AUGMENTIERUNG VON LIDAR-DATEN**
METHOD AND SYSTEM FOR AUGMENTING LIDAR DATA
PROCÉDÉ ET SYSTÈME D'AUGMENTATION DE DONNÉES LIDAR

(30) Priorität: 05.11.2020 DE 102020129158
(43) Veröffentlichungstag der Anmeldung: 13.09.2023
(73) Patentinhaber: dSPACE GmbH, 33102 Paderborn (DE)
(72) Erfinder: HASENKLEVER, Daniel, 33102 Paderborn (DE); FUNKE, Simon, 33102 Paderborn (DE); KESSLER, Philipp, 33102 Paderborn (DE); DÖRR, Dominik, 33102 Paderborn (DE)
(86) Internationale Anmeldenummer: PCT/EP2021/080610
(87) Internationale Veröffentlichungsnummer: WO 2022/096558

(56) Entgegenhaltungen:
- US-A1- 2018 364 717
- US-A1- 2019 228 571
- US-A1- 2020 160 598

## Beschreibung

Die Erfindung betrifft ein computerimplementiertes Verfahren zur Erzeugung von Fahrszenarios auf der Grundlage von LIDAR-Rohdaten, einen computerlesbaren Datenträger und ein Computersystem.

Autonomes Fahren verspricht ein noch nie dagewesenes Maß an Komfort und Sicherheit im alltäglichen Verkehr. Trotz enormer Investitionen diverser Unternehmen sind bestehende Ansätze aber nur unter eingeschränkten Bedingungen einsetzbar bzw. ermöglichen nur eine Teilmenge völlig autonomen Verhaltens. Ein Grund dafür liegt in dem Fehlen einer ausreichenden Anzahl und Vielfalt von Fahrszenarien. Für das Training und die Erprobung von autonomen Fahrfunktionen muss eine große Anzahl von Kilometern zurückgelegt werden, um einen sicheren Betrieb zu gewährleisten. So ist es auf der Grundlage von Praxistests auf der Straße beispielsweise nicht möglich, statistisch nachzuweisen, dass ein autonomes Fahrzeug in Bezug auf Todesfälle sicherer ist als ein menschlicher Fahrer.

Durch den Einsatz von Simulationen kann die Anzahl der "gefahrenen" Kilometer deutlich erhöht werden. Allerdings ist die Modellierung geeigneter Fahrszenarien in einer Simulationsumgebung umständlich, und die Wiedergabe von aufgezeichneten Sensordaten ist auf zuvor angetroffene Fahrszenarien beschränkt.

Aus der gattungsbildenden US 2018/0364717 A1 ist ein voxelbasiertes Verfahren zur Schätzung einer Bodenebene und zur Identifizierung statischer und dynamischer Objekte bekannt. Die ermittelten Informationen können einem Tracker oder einem Planner zum Betrieb eines autonomen Fahrzeugs bereitgestellt werden. Die US 2019/0228571 A1 offenbart ein Verfahren zur Generierung realistischer virtueller 3D-Welten basierend auf geographischen Kartendaten. Die erzeugten Modelle können zum Trainieren autonomer Fahrzeugsysteme genutzt werden. Aus der US 2020/160598 A1 ist ein Verfahren zum Synthetisieren von LIDAR-Punktwolken bekannt, das zum Generieren von Fahrsimulationen benutzt werden kann; im Gegensatz zur vorliegenden Erfindung werden dynamische Verkehrsteilnehmer beim Erstellen der Punktwolken aber aus den Rohdaten herausgefiltert,

Aufgabe der vorliegenden Erfindung ist es daher, verbesserte Verfahren zur Erzeugung von Sensordaten zu Fahrszenarios bereitzustellen; insbesondere wäre es wünschenswert, bestehende Fahrszenarien einfach um Variationen erweitern zu können.

Diese Aufgabe wird durch ein Verfahren zur Erzeugung eines Simulationsszenarios für ein Landfahrzeug nach Anspruch 1, einen computerlesbaren Datenträger nach Anspruch 11 und ein Computersystem nach Anspruch 12 gelöst. Vorteilhafte Weiterbildungen sind Gegenstand der abhängigen Unteransprüche.

Ein statisches Objekt ändert seine Position in der Zeit nicht, während sich die Position eines Verkehrsteilnehmers dynamisch ändern kann. Der Begriff dynamischer Verkehrsteilnehmer umfasst vorzugsweise auch zeitweise statische Verkehrsteilnehmer wie z. B. ein geparktes Auto, d. h. einen Verkehrsteilnehmer, der sich zu einem bestimmten Zeitpunkt bewegen, aber auch für eine gewisse Dauer stillstehen kann.

Ein Simulationsszenario beschreibt vorzugsweise ein durchgehendes Fahrmanöver, wie beispielsweise einen Überholvorgang, der sich in einem durch Straßeninformationen und statische Objekte gegebenen Umfeld abspielt. In Abhängigkeit von dem Verhalten bzw. den Trajektorien der dynamischen Verkehrsteilnehmer kann es sich dabei um ein sicherheitskritisches Fahrmanöver handeln, wenn z.B. bei dem Überholvorgang durch ein entgegenkommendes Fahrzeug Kollisionsgefahr besteht.

Bei der bestimmten Region kann es sich um ein geografisch durch einen Bereich von GPS-Koordinaten definiertes Gebiet handeln. Es kann sich aber auch um ein durch die aufgenommenen Sensordaten definiertes Gebiet handeln, welches beispielsweise einen Teilbereich der von den Umfeldsensoren erfassten Umgebung umfasst.

Das Exportieren des Simulationsszenarios kann ein Speichern einer oder mehrerer Dateien auf einem Datenträger und/oder ein Hinterlegen von Informationen in einer Datenbank umfassen. Die Dateien bzw. Informationen in der Datenbank können anschließend beliebig oft ausgelesen werden, um z.B. Sensordaten für einen virtuellen Fahrtest zu erzeugen. Somit kann das bestehende Fahrszenario für den Test von verschiedenen autonomen Fahrfunktionen und/oder zur Simulation verschiedener Umfeldsensoren eingesetzt werden. Es kann auch vorgesehen sein, direkt simulierte Sensordaten für das bestehende Fahrszenario zu exportieren.

Das erfindungsgemäße Verfahren konzentriert sich auf LIDAR-Daten und integriert den Schritt der Szenariengenerierung, wodurch das Simulationsszenario nicht auf feste Sensordaten beschränkt ist, sondern relative Koordinaten für die Objekte und Verkehrsteilnehmer vorliegen. Somit kann eine intelligente Vorauswahl interessanter Szenarien, aber auch eine Ergänzung bestehender Szenarien erfolgen.

In einer bevorzugten Ausführungsform der Erfindung umfassen die Rohdaten synthetische Sensordaten, die in einer Simulationsumgebung sensorrealistisch erzeugt werden. Als Eingangsdaten des erfindungsgemäßen Verfahrens können von einem realen Fahrzeug aufgezeichnete Sensordaten, synthetische Sensordaten oder eine Kombination aufgezeichneter und synthetischer Sensordaten verwendet werden.

Eine bevorzugte Ausführungsform der Erfindung stellt eine End-to-End-Pipeline mit definierten Schnittstellen für alle Werkzeuge und Operationen bereit. Dadurch können Synergien zwischen den verschiedenen Werkzeugen genutzt werden, wie z. B. die Verwendung von szenariobasierten Tests zur Anreicherung der Simulationsszenarios bzw. der aus diesen erzeugten simulierten Sensordaten.

In einer bevorzugten Ausführungsform umfasst die Erfindung ferner den Schritt eines Modifizierens des Simulationsszenarios, insbesondere durch Modifizieren mindestens einer Trajektorie und/oder Hinzufügen mindestens eines weiteren dynamischen Verkehrsteilnehmers, vor dem Exportieren des Simulationsszenarios. Die Modifikationen können willkürlich oder angepasst sein, um eine gewünschte Eigenschaft eines Szenarios zu erzielen. Dies hat den Vorteil, dass durch das Hinzufügen von Simulationsszenarien, insbesondere zu kritischen Situationen, Sensordaten für eine Vielzahl von Szenarien simuliert und somit die Anzahl der Trainingsdaten erhöht werden können. Somit ermöglicht es einem Nutzer, seine Modelle mit einer größeren Menge von relevanten Daten zu trainieren, was beispielsweise zu verbesserten Perzeptionsalgorithmen führt.

In einer bevorzugten Ausführungsform werden die Schritte Modifizieren des Simulationsszenarios und Exportieren des Simulationsszenarios wiederholt, wobei vor dem Exportieren des Simulationsszenarios jeweils eine andere Modifikation angewendet wird, so dass ein Satz von Simulationsszenarien zusammengestellt wird. Die einzelnen Simulationsszenarien können Metadaten aufweisen, die beispielsweise angeben, wie viele Fußgänger in einem Simulationsszenario vorkommen und/oder die Straße überqueren. Die Metadaten können insbesondere aus der Lokalisierung und Identifizierung der statischen Objekte und/oder Verkehrsteilnehmer abgeleitet werden. Daneben können auch Angaben zum Straßenverlauf, wie Kurvenparameter, oder einer Umgebung als Metadaten zum Simulationsszenario hinzugefügt werden. Der endgültige Datensatz enthält vorzugsweise sowohl die Rohdaten als auch die erweiterten synthetischen Punktwolken. In einer bevorzugten Ausführungsform ist der zur Szenariengenerierung eingesetzte Rechner mit einem Datenbankserver verbunden und/oder umfasst eine Datenbank, wobei in der Datenbank bestehende Simulationsszenarien hinterlegt sind, so dass vorhandene Szenarien zur Ergänzung des Satzes an Simulationsszenarien herangezogen werden können.

In einer bevorzugten Ausführungsform wird mindestens eine Eigenschaft des Satzes der Simulationsszenarien bestimmt, und modifizierte Simulationsszenarien werden zu dem Satz der Simulationsszenarien hinzugefügt werden, bis die gewünschte Eigenschaft erfüllt ist. Bei der Eigenschaft kann es sich insbesondere um eine Mindestanzahl von Simulationsszenarien handeln, die ein bestimmtes Merkmal aufweisen. Beispielsweise kann als Eigenschaft des Satzes von Simulationsszenarien gefordert werden, dass Simulationsszenarien unterschiedlichen Typs, wie Innenstadtszenarien, Autobahnszenarien und/oder Szenarien, in denen vorgegebene Objekte vorkommen, mit mindestens einer vorgegebenen Häufigkeit vorkommen. Es kann auch als Eigenschaft gefordert werden, dass ein vorgegebener Anteil von Simulationsszenarien des Satzes zu vorgegebenen Verkehrssituationen führt, also beispielsweise einen Überholvorgang beschreibt und/oder es zu einer Kollisionsgefahr kommt.

In einer bevorzugten Ausführungsform umfasst das Bestimmen der Eigenschaft des Satzes von Simulationsszenarien das Analysieren jedes modifizierten Simulationsszenarios unter Verwendung mindestens eines neuronalen Netzes und/oder das Ausführen mindestens einer Simulation des modifizierten Simulationsszenarios. Durch das Ausführen der Simulation kann beispielsweise sichergestellt werden, dass die modifizierten Simulationsszenarien zu einer Kollisionsgefahr führen.

In einer bevorzugten Ausführungsform hängt die Eigenschaft mit mindestens einem Merkmal der Simulationsszenarien zusammen, stellt insbesondere eine charakteristische Eigenschaft der statistischen Verteilung von Simulationsszenarien dar, und der Satz von Simulationsszenarien wird erweitert, um eine gewünschte statistische Verteilung der Simulationsszenarien zu erhalten. Das Merkmal kann beispielsweise angeben, ob und/oder wie viele Objekte einer vorgegebenen Klasse in dem Simulationsszenario vorkommen. Auch kann als charakteristische Eigenschaft vorgegeben werden, dass der Satz von Simulationsszenarien ausreichend groß ist, um Tests mit einer vorgegebenen Konfidenz durchführen zu können. So kann beispielsweise eine vordefinierte Anzahl von Szenarien für verschiedene Objekt- bzw. Verkehrsteilnehmer-Klassen bereitgestellt werden, um eine ausreichende Datenmenge für maschinelles Lernen zu liefern.

Bevorzugt umfasst das Verfahren die Schritte Empfangen einer gewünschten Sensorkonfiguration, Erzeugen von simulierten Sensordaten basierend auf dem Simulationsszenario sowie der gewünschten Sensorkonfiguration, und Exportieren der simulierten Sensordaten. Die Simulationsszenarien umfassen die räumlichen Beziehungen der Szene und enthalten somit hinreichende Informationen, dass Sensordaten für beliebige Umfeldsensoren erzeugt werden können.

Besonders bevorzugt umfasst das Verfahren weiterhin den Schritt des Trainierens eines neuronalen Netzes für die Perzeption mittels der simulierten Sensordaten und/oder des Testens einer autonomen Fahrfunktion mittels der simulierten Sensordaten.

In einer bevorzugten Ausführungsform weisen die empfangenen Rohdaten eine geringere Auflösung als die simulierten Sensordaten auf. Indem zunächst das abstrakte Szenario aus den Rohdaten extrahiert wird, können Fahrsituationen, die mit einem älteren, niedrig aufgelösten Sensor aufgezeichnet wurden, auch für neue Systeme mit einer höheren Auflösung wiederverwendet werden.

In einer bevorzugten Ausführungsform umfassen die simulierten Sensordaten eine Vielzahl von Kamerabildern. Alternativ oder zusätzlich können Szenarien, die mit einem LIDAR-Sensor aufgezeichnet wurden, in Bilder eines Kamerasensors umgewandelt werden.

Die Erfindung betrifft weiterhin einen computerlesbaren Datenträger, der Anweisungen enthält, die, wenn sie von einem Prozessor eines Computersystems ausgeführt werden, das Computersystem veranlassen, ein erfindungsgemäßes Verfahren auszuführen.

Ferner betrifft die Erfindung ein Computersystem, umfassend einen Prozessor, eine Mensch-Maschine-Schnittstelle und einen nichtflüchtigen Speicher, wobei der nichtflüchtige Speicher Befehle enthält, die, wenn sie von dem Prozessor ausgeführt werden, das Computersystem veranlassen, ein erfindungsgemäßes Verfahren auszuführen.

Bei dem Prozessor kann es sich um einen Allzweck-Mikroprozessor handeln, der üblicherweise als zentrale Verarbeitungseinheit eines Arbeitsplatzrechners verwendet wird, oder er kann ein oder mehrere Verarbeitungselemente umfassen, die zur Durchführung spezifischer Berechnungen geeignet sind, wie beispielsweise eine Grafikverarbeitungseinheit. In alternativen Ausführungsformen der Erfindung kann der Prozessor durch einen programmierbaren Logikbaustein, z. B. ein feldprogrammierbares Gate-Array, ersetzt oder ergänzt werden, der so konfiguriert ist, dass er eine bestimmte Anzahl von Operationen ausführen kann, und/oder einen IP-Core-Mikroprozessor umfasst.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: ein beispielhaftes Diagramm eines Computersystems,
- Figur 2: eine perspektivische Ansicht einer beispielhaften LIDAR-Punktwolke,
- Figur 3: einen schematischen Ablaufplan einer Ausführungsform des erfindungsgemäßen Verfahrens zur Erzeugung von Simulationsszenarien, und
- Figur 4: eine beispielhafte synthetische Punktwolke aus der Vogelperspektive.

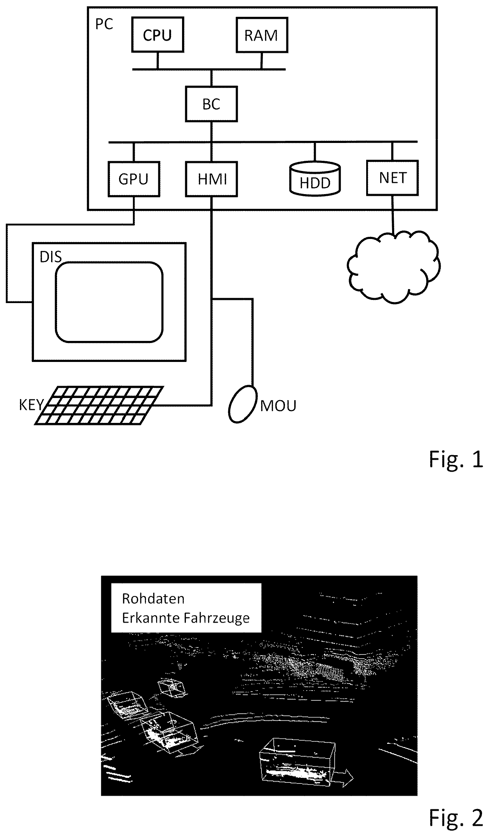

Fig. 1 zeigt eine beispielhafte Ausführungsform eines Computersystems.

Die gezeigte Ausführungsform umfasst einen Host-Computer PC mit einem Monitor DIS und Eingabegeräten wie einer Tastatur KEY und einer Maus MOU.

Der Host-Computer PC umfasst mindestens eine Prozessor CPU mit einem oder mehreren Kernen, einen Arbeitsspeicher RAM mit wahlfreiem Zugriff und eine Anzahl von Geräten, die an einen lokalen Bus (wie PCI Express) angeschlossen sind, der Daten über einen Buscontroller BC mit der CPU austauscht. Die Geräte umfassen z.B. eine Grafikprozessor GPU zum Ansteuern des Displays, einen Controller USB zum Anschließen von Peripheriegeräten, einen nichtflüchtigen Speicher wie eine Festplatte oder eine Solid-State-Disk und eine Netzwerkschnittstelle NC. Der nichtflüchtige Speicher kann Anweisungen umfassen, die, wenn sie von einem oder mehreren Kernen des Prozessors CPU ausgeführt werden, das Computersystem veranlassen, ein erfindungsgemäßes Verfahren auszuführen.

In einer Ausführungsform der Erfindung, die durch eine stilisierte Wolke in der Figur angedeutet wird, kann der Host-Computer einen oder mehrere Server umfassen, die ein oder mehrere Rechenelemente wie Prozessoren oder FPGAs umfassen, wobei die Server über ein Netzwerk mit einem Client verbunden sind, der eine Anzeigevorrichtung und Eingabegerät umfasst. Somit kann das Verfahren zur Erzeugung von Simulationsszenarien teilweise oder vollständig auf einem entfernten Server ausgeführt werden, beispielsweise in einem Cloud-Computing-Setup. Alternativ zu einem PC-Client kann eine grafische Benutzerschnittstelle der Simulationsumgebung auf einem tragbaren Computergerät angezeigt werden, insbesondere einem Tablet oder einem Smartphone.

Fig. 2 zeigt eine perspektivische Ansicht einer beispielhaften Punktwolke, wie sie von einem herkömmlichen LIDAR-Sensor erzeugt wird. Die Rohdaten (Raw Data) wurden bereits mit Bounding Boxes um erkannte Fahrzeuge (detected vehicles) annotiert. Auf der dem LIDAR-Sensor zugewandten Seite von Objekten ist Dichte an Messpunkten hoch, während auf der Rückseite aufgrund Verdeckung kaum Messpunkte liegen. Auch weiter entfernte Objekte können ggfs. nur aus wenigen Punkten bestehen.

Neben LIDAR-Sensoren weisen Fahrzeuge häufig auch eine oder mehrere Kameras, einen Empfänger für Satellitennavigationssignale (wie GPS), Geschwindigkeitssensoren (bzw. Raddrehzahlsensoren), Beschleunigungssensoren und Gierratensensoren auf. Während der Fahrt werden diese vorzugsweise auch gespeichert, und können somit bei der Erzeugung eines Simulationsszenarios berücksichtigt werden. Kameradaten bieten neben einer höheren Auflösung in der Regel auch Farbinformationen, so dass sie LIDAR-Daten bzw. Punktwolken gut ergänzen.

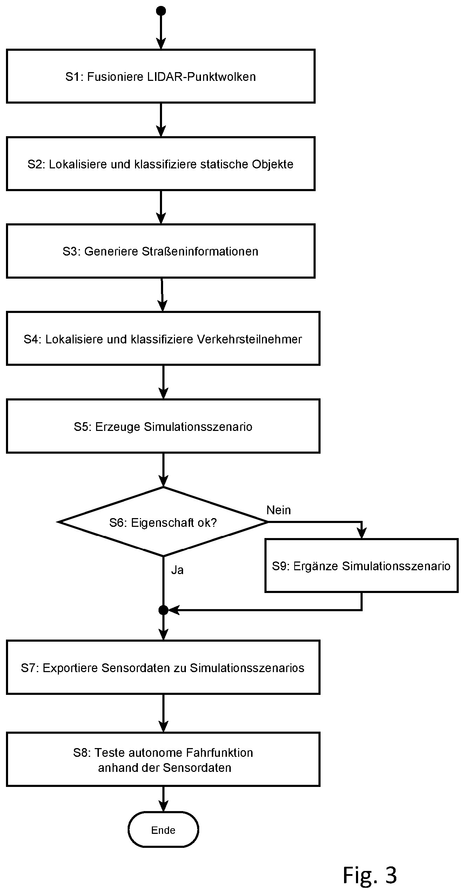

Fig. 3 zeigt einen schematischen Ablaufplan einer Ausführungsform des erfindungsgemäßen Verfahrens zur Erzeugung von Simulationsszenarien.

Eingabedaten für die Szenariengenerierung sind Punktwolken, die an aufeinanderfolgenden Zeitpunkten aufgenommen wurden. Optional können weitere Daten, wie z.B. Kameradaten, verwendet werden, um die Informationen im Datensatz anzureichern, z.B. wenn die GPS-Daten nicht genau genug sind. Zu diesem Zweck können an sich bekannte Algorithmen zur Simultanen Positionsbestimmung und Kartierung verwendet werden.

In Schritt S1 (Fusioniere LIDAR-Punktwolken) werden die LIDAR-Punktwolken einer bestimmten Region in einem gemeinsamen Koordinatensystem verschmolzen bzw. fusioniert.

Um eine zeitlich gültige/konsistente Szene zu konstruieren, werden die Scans verschiedener Zeitpunkte zueinander in Bezug gesetzt bzw. die relative 3D-Translation und 3D-Rotation zwischen den Punktwolken ermittelt. Dazu werden Informationen wie Fahrzeug-Odometrie, bestehend aus 2D-Translation und Gier- bzw. 3D-Rotationsinformationen, wie diese aus den Fahrzeugsensoren ermittelbar sind, und Satellitennavigationsdaten (GPS), bestehend aus 3D-Translationsinformationen verwendet. Ergänzt werden diese durch Lidar-Odometrie, welche unter Verwendung eines Iterative Closest Point (ICP) Algorithmus relative 3D-Translationen und 3D-Rotationen liefert. Hierbei können an sich bekannte ICP-Algorithmen eingesetzt werden, wie beispielsweise der in dem Beitrag "Sparse Iterative Closest Point" von Bouaziz et al. auf dem Eurographics Symposium on Geometry Processing 2013 beschriebene Algorithmus.

Diese Informationen werden dann mit Hilfe einer graphenbasierten Optimierung fusioniert, die die gegebenen Informationen (unter Verwendung ihrer Kovarianzen) gewichtet und die resultierende Odometrie berechnet. In dem Artikel "A Tutorial on Graph-Based SLAM" von Grisetti et al., Intelligent Transportation Systems Magazine, IEEE, 2(4):31--43, 2010, ist ein beispielhafter Algorithmus zur graphenbasierten Optimierung beschrieben. Die berechnete Odometrie kann dann verwendet werden, um die gegebenen Sensordaten (wie Lidar, Kamera usw.) in einem gemeinsamen Koordinatensystem zu fusionieren. Für die Annotierung statischer Objekte ist es hierbei zweckmäßig, die verschiedenen Einzelbild-Punktwolken zu einer registrierten Punktwolke zusammenzufügen.

In Schritt S2 (Lokalisiere und klassifiziere statischer Objekte) werden statische Objekte innerhalb der registrierten bzw. zusammengefügten Punktwolke annotiert, also lokalisiert und identifiziert.

Statische Objektdaten enthalten Gebäude, Vegetation, Straßeninfrastruktur und ähnliches. Jedes statische Objekt in der registrierten Punktwolke wird entweder manuell, halbautomatisch, automatisch oder durch eine Kombination dieser Verfahren annotiert. In einer bevorzugten Ausführungsform werden statische Objekte in der registrierten oder zusammengefügten Punktwolke mittels an sich bekannter Algorithmen automatisch identifiziert und gefiltert. In einer alternativen Ausführungsform kann der Host-Computer Annotationen eines menschlichen Annotators empfangen.

Die Verwendung einer registrierten oder zusammengefügten und damit dichten Punktwolke bringt viele Vorteile in der Annotation statischer Objekte mit sich. Da viel mehr Punkte auf einem Objekt zur Verfügung stehen, ist es viel einfacher, die richtige Position und die richtige Größe jedes einzelnen Objekts zu ermitteln. Hinzu kommt, dass man während der Fahrt ein Objekt aus verschiedenen Blickwinkeln sehen kann, wodurch wir zusätzliche Punkte auf dem Objekt in der Lidar-Punktwolke aus allen Richtungen erhalten. Insgesamt wird daher eine viel genauere Annotation der Grenzen eines Objekts möglich. Bei einer Punktwolke aus einem einzigen Blickwinkel, stünden nur die Punkte aus diesem einen Blickwinkel für die Annotation zur Verfügung. Wenn man beispielsweise ein Objekt von vorne betrachtet, ist es schwierig, die Grenze im hinteren Teil des Objekts zu bestimmen, da es keine Informationen gibt, die bei der Schätzung dieser Grenze helfen würden. In der zusammengesetzten Punktwolke, die Aufnahmen aus mehreren Blickwinkeln umfasst, sind statische Objekte hingegen sauber definiert.

In Schritt S3 (Generiere Straßeninformationen) werden Straßeninformationen auf der Grundlage der registrierten Punktwolke und der Kameradaten generiert.

Um die Straßeninformationen zu erzeugen, wird die Punktwolke so gefiltert, dass alle Punkte, die die Straßenoberfläche beschreiben, identifiziert werden. Diese Punkte werden zur Schätzung der so genannten Bodenebene verwendet, die die Bodenoberfläche für die jeweiligen LIDAR-Punktwolke oder im Falle einer registrierten Punktwolke für die gesamte Szene darstellt. Im nächsten Schritt werden die Farbinformationen aus den von einer oder mehreren Kameras erzeugten Bildern entnommen und mit Hilfe der intrinsischen und extrinsischen Kalibrierungsinformationen, insbesondere der Objektivbrennweite und Sichtwinkel der Kamera, auf die Bodenebene projiziert.

Die Straße wird dann mit Hilfe dieses Bildes in der Draufsicht erstellt. Zunächst werden die Fahrbahngrenzen erkannt und beschriftet. In einem zweiten Schritt werden sogenannte Segmente und Kreuzungen identifiziert. Segmente sind Teile des Straßennetzes mit einer konstanten Anzahl von Fahrspuren. Im nächsten Schritt werden Hindernisse auf der Straße, wie zum Beispiel Verkehrsinseln, zusammengeführt. Der folgende Schritt ist die Beschriftung von Markierungen auf der Straße. Anschließend werden die einzelnen Elemente mit den richtigen Verknüpfungen kombiniert, um alles zu einem Straßenmodell zusammenzufügen, das die Geometrie und die Semantik des Straßennetzes für diese spezielle Szene beschreibt.

In Schritt S4 (Lokalisiere und klassifiziere Verkehrsteilnehmer) werden dynamische Objekte bzw. Verkehrsteilnehmer in den aufeinanderfolgenden Punktwolken annotiert.

Aufgrund ihres dynamischen Verhaltens werden Verkehrsteilnehmer separat annotiert. Da sich Verkehrsteilnehmer bewegen, ist es nicht möglich, eine registrierte oder zusammengesetzte Punktwolke zu verwenden, die Annotation von dynamischen Objekten bzw. Verkehrsteilnehmern erfolgt vielmehr in Einzelbild-Punktwolken. Jedes dynamische Objekt wird annotiert, d.h. lokalisiert und klassifiziert. Bei den dynamischen Objekten bzw. Verkehrsteilnehmern in der Punktwolke kann es sich um Autos, Lastwagen, Lieferwagen, Motorräder, Radfahrer, Fußgänger und/oder Tiere handeln. Prinzipiell kann der Host-Computer Ergebnisse einer manuellen oder computerunterstützten Annotation empfangen. In einer bevorzugten Ausführungsform erfolgt die Annotation automatisch mittels an sich bekannter Algorithmen, insbesondere trainierter Deep-Learning-Algorithmen.

Für die Annotation ist es zweckmäßig, wenn Bilder mindestens einer parallel zum LIDAR-Sensor aufnehmenden Kamera berücksichtigt werden, die ja aufgrund der zeitlichen Koinzidenz dieselben Objekte zeigen muss (entsprechender Überlapp der Blickwinkel vorausgesetzt). Im Vergleich zu einer spärlichen Lidar-Punktwolke enthalten Kamerabilder insbesondere durch die höhere Auflösung mehr Informationen. In der Lidar-Punktwolke könnte z.B. ein weit entfernter Fußgänger (>100 Meter) nur durch einen einzigen Lidar-Punkt repräsentiert werden, aber im Kamerabild deutlich sichtbar sein. Zweckmäßigerweise erfolgt daher eine Objekterkennung auf den Kamerabildern mittels an sich bekannter Algorithmen wie YOLO und eine Korrelation mit der entsprechenden Region der LIDAR-Punktwolke. Die Kamerainformationen sind daher sehr hilfreich für die Identifizierung und Klassifizierung eines Objekts; darüber hinaus kann eine auf Kamerainformationen basierende Klassifizierung auch bei der Bestimmung der Größe eines Objekts helfen. Abhängig von der Klassifizierung werden dann vorgegebene Standardgrößen für die verschiedenen Verkehrsteilnehmer verwendet bzw. vorgegeben. Dies erleichtert die Reproduktion solcher Verkehrsteilnehmer, die sich nie nahe genug am Erfassungsfahrzeug befindet, um eine Größenbestimmung aus einer dichten Punktverteilung auf dem Objekt innerhalb der LIDAR-Punktwolke zu ermöglichen.

Nach der Identifizierung und Klassifizierung der Verkehrsteilnehmer in den Einzelbild-LIDAR-Punktwolken und - sofern vorhanden - Kamerabildern werden die zeitlichen Ketten für die einzelnen Objekte identifiziert. Jedem Verkehrsteilnehmer wird eine eindeutige ID für alle Einzelaufnahmen, also Punktwolken und Bilder, in denen er vorkommt. In einer bevorzugten Ausführungsform wird das erste Bild, auf dem der Verkehrsteilnehmer auftaucht, zur Identifizierung und Klassifizierung des Objekts verwendet und dann das entsprechende Feld bzw. die entsprechenden Tags auf die nächsten Bilder übertragen. In einer alternativen bevorzugten Ausführungsform findet ein Tracking, d.h. eine algorithmische Verfolgung, des Verkehrsteilnehmers über aufeinanderfolgende Bilder statt. Hierbei werden die erkannten Objekte über mehrere Frames hinweg verglichen, und wenn die Überlappung der Flächen über einen vorgegebenen Schwellenwert hinausgeht, also eine Übereinstimmung erkannt wurde, werden diese demselben Verkehrsteilnehmer zugeordnet, so dass die erkannten Objekte die gleiche ID bzw. eindeutige Identifikationsnummer aufweisen. Diese beiden Techniken ermöglichen die Generierung von konsistenten zeitlichen Ketten über die aufeinanderfolgenden Kamerabilder und LIDAR-Punktwolken. So werden für jedes dynamische Objekt zeitliche und räumliche Trajektorien erzeugt, die zur Beschreibung des Verhaltens des Verkehrsteilnehmers in der Simulation verwendet werden können. Somit werden dynamische Objekt entlang des zeitlichen Verlaufs korreliert, um Trajektorien der Verkehrsteilnehmer zu erhalten.

In Schritt S5 (Erzeuge Simulationsszenario) wird aus den statischen Objekten, der Straßeninformation und den Trajektorien der Verkehrsteilnehmer ein Wiedergabeszenario für eine Simulationsumgebung erstellt.

Vorzugsweise werden die bei der Annotierung der Rohdaten in den Schritten S2 bis S4 gewonnenen Informationen automatisch an eine Simulationsumgebung übertragen. Die Informationen umfassen z.B. die Größen, Klassen, und Attribute von statischen Objekten, sowie für Verkehrsteilnehmer deren Trajektorien. Sie werden zweckmäßigerweise in einem geeigneten Dateiaustauschformat wie z.B. einer JSON-Datei gespeichert; JSON bezeichnet hierbei die JavaScript Object Notation, eine gebräuchliche Sprache für die Spezifizierung von Szenarien.

Zunächst werden die in der JSON-Datei enthaltenen Informationen über die Straße in ein geeignetes Straßenmodell der Simulationsumgebung übertragen. Dazu gehören die Geometrie der Straße und alle Semantiken, die während der Annotation ermittelt bzw. eingeführt wurden, zum Beispiel Informationen darüber, welche Fahrspuren an einer Grenze zwischen Fahrbahnsegmenten in welche anderen Fahrspuren übergehen oder von welcher Fahrbahnspur auf welche Fahrbahnspur beim Überqueren einer Kreuzung gefahren werden darf.

Anschließen werden alle annotierten statischen Objekte in der Szene platziert. Dazu wird aus der JSON-Datei die Klassifikation für jedes Objekt inklusive einiger zusätzlicher Attribute ausgelesen bzw. abgeleitet. Basierend auf diesen Informationen wird ein passendes 3D-Objekt aus einer 3D-Asset-Bibliothek ausgewählt und an der entsprechenden Stelle in der Szene platziert.

Schließlich werden die Verkehrsteilnehmer in der Szene platziert und diese entsprechend der annotierten Trajektorie bewegen. Dazu werden aus der Trajektorie abgeleitete Wegpunkte verwendet und mit den erforderlichen zeitlichen Informationen versehen in der Szene platziert. Die Fahrermodelle in der Simulation geben dann das Verhalten des Fahrzeugs so wieder, wie es während der Testfahrt aufgezeichnet wurde.

Anhand der Straßeninformationen, den statischen Objekten und den Trajektorien der Verkehrsteilnehmer wird in der Simulationsumgebung somit ein "Replay-Szenario" erzeugt. Hierbei verhalten sich alle Verkehrsteilnehmer genauso wie im aufgezeichneten Szenario, und das Replay-Szenario kann beliebig oft wiedergegeben werden. Dies ermöglicht eine hohe Reproduzierbarkeit der aufgezeichneten Szenarien innerhalb der Simulationsumgebung, um z.B. neue Versionen von Fahrfunktionen auf ähnliches Fehlverhalten wie bei der Testfahrt zu überprüfen.

In einem weiteren Schritt werden diese Replay-Szenarien zu "logischen Szenarien" abstrahiert. Logische Szenarien werden aus den Replay-Szenarien abgeleitet, indem das konkrete Verhalten der verschiedenen Verkehrsteilnehmer zu Manövern abstrahiert werden, in denen einzelne Parameter innerhalb vorgegebener Parameterbereichen für diese Manöver variiert werden können. Parameter eines logischen Szenarios können insbesondere relative Positionen, Geschwindigkeiten, Beschleunigungen, Ausgangspunkte für bestimmte Verhaltensweisen wie Spurwechsel, und Beziehungen zwischen verschiedenen Objekten sein. Durch die Ableitung bzw. das Einfügen von Manövern mit sinnvollen Parameterbereiche ist es möglich, Variationen der aufgezeichneten Szenarien innerhalb der Simulationsumgebung auszuführen. Dies bildet die Grundlage für eine spätere Erweiterung des Satzes an Simulationsszenarien.

In Schritt S6 (Eigenschaft ok?) wird eine Eigenschaft für den bestehenden Satz eines oder mehrerer bereits erstellter Szenarien ermittelt und mit einem Sollwert verglichen. Je nachdem, ob die gewünschte Eigenschaft erfüllt ist, wird die Ausführung in Schritt S7 oder Schritt S9 fortgesetzt. Hierbei können eine oder mehrere Merkmale des einzelnen Szenarios betrachtet werden, also beispielsweise gefordert werden, dass der Satz nur solche Szenarien umfasst, bei denen das geforderte Merkmal vorliegt, oder eine charakteristische Eigenschaft des Satzes aus Simulationsszenarien wie eine Häufigkeitsverteilung ermittelt werden. Diese können zu einem einfachen oder kombinierten Kriterium formuliert werden, welches der Datensatz erfüllen muss.

Die Analyse des Datensatzes im Hinblick auf die gewünschte Spezifikation ("Delta-Analyse") kann z.B. folgende Fragen umfassen, muss aber nicht auf diese beschränkt sein: Wie ist die Verteilung der verschiedenen Objekte im Datensatz? Was ist die Zielverteilung des Datenbestandes für die gewünschte Anwendung? Insbesondere kann eine Mindesthäufigkeit des Vorkommens für verschiedene Klassen von Verkehrsteilnehmern gefordert werden. Dies könnte anhand von Metadaten bzw. Parametern eines Simulationsszenarios überprüft werden.

Zweckmäßigerweise können bei der Annotation der Rohdaten in den Schritten S2 bis S4 bereits Merkmale ermittelt werden, die bei der Analyse des Datensatzes herangezogen werden können. Vorzugsweise werden die Rohdaten mit Hilfe von neuronalen Netzen analysiert, um die Verteilung der Merkmale innerhalb der realen Lidar-Punktwolke zu identifizieren. Dazu werden eine Reihe von Objekterkennungsnetzen, Objektverfolgern sowie Attributerkennungsnetzen verwendet, die automatisch Objekte innerhalb der Szene erkennen und diesen Objekten Attribute - vorzugsweise spezifisch für den Anwendungsfall - hinzufügen. Da diese Netze ohnehin für die Erstellung des Simulationsszenarios benötigt werden, entsteht nur ein geringer Zusatzaufwand. Die ermittelten Merkmale können gesondert hinterlegt und dem Simulationsszenario zugeordnet werden. Die automatisch erkannten Objekte und ihre Attribute können dann verwendet werden, um Merkmale des ursprünglich aufgenommenen Szenarios zu analysieren.

Umfassen die Rohdaten bereits einen Satz aus mehreren Szenarien, so können die Eigenschaften des Rohdatensatzes mit der für den Anwendungsfall spezifizierten Verteilung verglichen werden. Diese Eigenschaften können insbesondere die Häufigkeitsverteilung von Objektklassen, Licht- und Wetterbedingungen (Attribute der Szene) umfassen. Aus dem Vergleichsergebnis kann eine Spezifikation für die Datenanreicherung ermittelt werden. Beispielsweise kann festgestellt werden, dass bestimmte Objektklassen oder Attribute im gegebenen Datensatz unterrepräsentiert sind und somit entsprechende Simulationsszenarien mit diesen Objekten bzw. Attributen hinzugefügt werden müssen. Eine zu geringe Häufigkeit kann darauf zurückzuführen sein, dass die betrachteten Objekte bzw. Attribute in der bestimmten Region, in dem die Daten aufgezeichnet wurden, nur selten vorkommen und/oder zur Aufnahmezeit zufällig nur selten vorkamen.

Bei der Analyse des Datensatzes kann aber auch gefordert werden, dass eine Anzahl von Simulationsszenarien vorhanden sein muss, in denen ein Fußgänger die Straße überquert und/oder eine Kollisionsgefahr auftritt. Optional kann daher eine Simulation des jeweiligen Szenarios erfolgen, um anhand eines szenariobasierten Testens eine weitere Spezifizierung und Auswahl nützlicher Daten für die Anreicherung zu ermitteln. Als Ergebnis wird vorzugsweise eine Spezifikation zur Anreicherung der Daten definiert, die angibt, welche Szenarien benötigt werden.

Optional kann szenariobasiertes Testen dazu verwendet werden, geeignete Szenarien zu finden, um die Spezifikation für die Datenerweiterung zu verfeinern. Wenn beispielsweise kritische Szenarien in Innenstädten von besonderem Interesse sind, kann das szenariobasierte Testen verwendet werden, um Szenarien mit bestimmten Leistungskennzahlen (KPIs) zu ermitteln, die alle Anforderungen erfüllen. Dementsprechend kann der erweiterte Datensatz auf ausgewählte und damit relevante Szenarien beschränkt werden, anstatt nur eine Permutation nach KPIs vorzunehmen.

Falls die Eigenschaft nicht gegeben ist (Nein), wird in Schritt S9 (Ergänze Simulationsszenario) der Datensatz durch Variation des Simulationsszenarios erweitert.

Bei dieser in Schritt S9 vorgenommenen Erweiterung des Datensatzes, welche zweckmäßigerweise in der Simulationsumgebung durchgeführt wird, kann ein Nutzer ausgehend von der automatisch ermittelten Verteilung innerhalb der Rohdaten eine beliebige statistische Verteilung definieren, die er in seinem erweiterten Datensatz erreichen möchte. Diese Verteilung kann vorzugsweise dadurch erreicht werden, dass aus dem bestehenden, zumindest teilweise automatisch kommentierten Szenario ein digitaler Zwilling erzeugt wird. Dieser digitale Zwilling kann dann permutiert werden, indem Verkehrsteilnehmer mit einer bestimmten Objektklasse, und/oder mit unterschiedlichem Verhalten bzw. einer veränderten Trajektorie hinzugefügt werden. In den hinzugefügten permutierten Simulationsszenarien wird ein virtuelles Datenerfassungsfahrzeug mit einer beliebigen Sensorausstattung platziert und wird dann zur Erzeugung neuer synthetischer Sensordaten verwendet. Die Sensorausstattung kann in beliebiger Weise von der für die Aufnahme der Rohdaten eingesetzten Sensorausstattung abweichen. Dies ist nicht nur hilfreich, um bestehende Daten zu ergänzen, sondern auch, wenn sich die Sensoranordnung des betrachteten Fahrzeugs ändert und die aufgezeichneten Szenarien als Basis zur Erzeugung von Sensordaten der neuen/anderen Sensoranordnung dienen.

Innerhalb der Simulationsumgebung kann der Satz von Simulationsszenarien nicht nur durch zusätzliche Verkehrsteilnehmer, sondern auch durch eine Änderung von Kontrasten, Wetter- und/oder Lichtbedingungen erweitert werden.

Optional werden bestehende Szenarien aus einer Szenario-Datenbank in die Erweiterung des Satzes an Simulationsszenarien einbezogen; diese können anhand früher aufgenommener Rohdaten erstellt worden sein. Eine solche Szenario-Datenbank erhöht die Effizienz der Datenerweiterung; in der Szenario-Datenbank können Szenarien für verschiedene Anwendungsfälle gespeichert sein und mit Eigenschaften annotiert sein. Durch eine Filterung anhand der hinterlegten Eigenschaften können geeignete Szenarien einfach aus der Datenbank abgerufen werden.

Wenn die Eigenschaft erfüllt ist (Ja), werden in Schritt S7 (Exportiere Sensordaten zu Simulationsszenarios) simulierte Sensordaten zu dem Simulationsszenario bzw. dem kompletten Satz an Simulationsszenarios exportiert. Hierbei können anhand einer Sensorkonfiguration wie beispielsweise einer Höhe über dem Boden und einer vorgegebenen Auflösung simulierte Sensordaten für einen oder mehrere Umfeldsensoren erzeugt werden; neben LIDAR-Daten können auch Kamerabilder anhand der Kameraparameter aus dem Simulationsszenario generiert werden.

In der gezeigten Ausführungsform wird der Export von simulierten Sensordaten für den gesamten Satz von Szenarien durchgeführt; im Allgemeinen könnte alternativ oder ergänzend jedes einzelne Szenario nach der Erstellung unabhängig exportiert werden. Ein vorheriger Export ist z. B. erforderlich, wenn die Bestimmung eines Merkmals die Simulation des Szenarios erfordert.

Durch die Anwendung neuronaler Netze können alle Szenarien als simulierte Sensordaten bzw. sensorrealistische Daten exportiert werden. Neuronale Netze, wie z. B. Generative Adversarial Networks (GANs), können die Eigenschaften verschiedener Sensoren, einschließlich des Sensorrauschens, nachahmen. Hierbei können sowohl die Eigenschaften des ursprünglich für die Aufnahme der Rohdaten verwendeten Sensors, als auch die Eigenschaften völlig anderer Sensoren simuliert werden. Zum einen kann daher ein weitgehend den Rohdaten nachempfundenes Szenario für das Training oder den Test eines Algorithmus verwendet werden. Zum anderen können auch eine virtuelle Aufnahme des Fahrszenarios mit verschiedenen LIDAR-Sensoren, aber auch mit anderen bildgebenden Sensoren wie insbesondere einer Kamera erzeugt und verwendet werden.

In Schritt S8 (Teste autonome Fahrfunktion anhand der Sensordaten) werden die exportierten ein oder mehreren Szenarien, d. h. in sich geschlossene Sätze von simulierten Sensordaten, zum Testen einer autonomen Fahrfunktion verwendet. Alternativ können sie auch zum Training der autonomen Fahrfunktion verwendet werden.

Die Erfindung ermöglicht es, einen Datensatz von Lidar-Sensordaten durch intelligente Ergänzung von Daten, die im ursprünglichen Datensatz fehlen, zu augmentieren. Indem die zusätzlichen Daten als realistische Sensordaten exportiert werden, können diese direkt für das Training und/oder den Test einer autonomen Fahrfunktion eingesetzt werden. Auch kann es vorgesehen sein, einen Datensatz zu erstellen bzw. einzusetzen, der sowohl die ursprünglichen Rohdaten als auch die synthetischen Sensordaten umfasst.

Als spezifischer Anwendungsfall kann die oben beschriebene Pipeline verwendet werden, um Daten von einem Sensortyp in eine synthetische Punktwolke derselben Umgebung und mit dem Szenario eines anderen Sensortyps zu konvertieren. So können beispielsweise Daten von alten Sensoren in synthetische Daten umgewandelt werden, die einen modernen Sensor repräsentieren. Entsprechend können alte Sensordaten verwendet werden, um die Daten aktueller Aufnahmen mit einem neuen Sensortyp zu erweitern. Für diesen Anwendungsfall einer Ausgabe "recycelter" Sensordaten wird vorzugsweise eine Processing Pipeline eingesetzt, welche insbesondere die Schritte S1, S2, S3, S4, S5 und S7 umfasst.

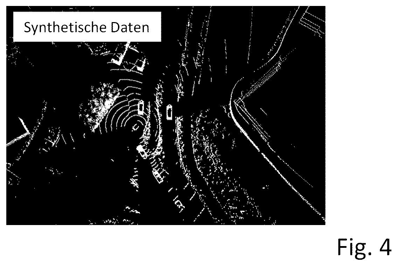

Abb. 4 zeigt eine Vogelperspektive einer synthetischen Punktwolke, die aus dem Export von Sensordaten des Simulationsszenarios resultiert. In der Abbildung sind einzelne Verkehrsteilnehmer durch Bounding Boxes gekennzeichnet.

Das erfindungsgemäße Verfahren ermöglicht die Ergänzung gemessener Sensordaten eines eingefahrenen Szenarios um simulierten Sensordaten zu variierten Simulationsszenarien. Hierdurch können Perzeptionsalgorithmen besser trainiert werden und umfassendere Tests autonomer Fahrfunktionen erfolgen.

## Patentansprüche

1. Computerimplementiertes Verfahren zur Erzeugung eines Simulationsszenarios für ein Fahrzeug, umfassend die Schritte
Empfangen von Rohdaten, wobei die Rohdaten eine Vielzahl von aufeinanderfolgenden LIDAR-Punktwolken, eine Vielzahl von aufeinanderfolgenden Kamerabildern und eine Vielzahl von aufeinanderfolgenden Geschwindigkeits- und/oder Beschleunigungsdaten umfassen,
Lokalisieren und Klassifizieren (S4) eines oder mehrerer dynamischer Verkehrsteilnehmer innerhalb der Vielzahl von aufeinanderfolgenden LIDAR-Punktwolken und Erzeugen von Trajektorien für den oder die Verkehrsteilnehmer,
Erstellen (S5) eines Simulationsszenarios, und
Exportieren (S7) des Simulationsszenarios, **gekennzeichnet durch** die Schritte
Verschmelzen (S1) der Vielzahl von aufeinanderfolgenden LIDAR-Punktwolken einer bestimmten Region in einem gemeinsamen Koordinatensystem, um eine zusammengesetzte Punktwolke zu erzeugen,
Lokalisieren und Klassifizieren (S2) eines oder mehrerer statischer Objekte innerhalb der zusammengesetzten Punktwolke,
Erzeugen (S3) von Straßeninformationen auf der Grundlage der zusammengesetzten Punktwolke, eines oder mehrerer statischer Objekte und mindestens eines Kamerabildes,
wobei das Simulationsszenario basierend auf dem einen oder den mehreren statischen Objekten, den Straßeninformationen und den erstellten Trajektorien für den einen oder die mehreren Verkehrsteilnehmer erstellt wird.

2. Verfahren nach Anspruch 1, ferner umfassend den Schritt Modifizieren (S9) des Simulationsszenarios, insbesondere durch Modifizieren mindestens einer Trajektorie und/oder Hinzufügen mindestens eines weiteren dynamischen Verkehrsteilnehmers, vor dem Exportieren (S7) des Simulationsszenarios.

3. Verfahren nach Anspruch 2, wobei die Schritte Modifizieren (S9) des Simulationsszenarios und Exportieren (S7) des Simulationsszenarios wiederholt werden, und wobei vor dem Exportieren (S7) des Simulationsszenarios jeweils eine andere Modifikation angewendet wird, so dass ein Satz von Simulationsszenarien zusammengestellt wird.

4. Verfahren nach Anspruch 3, wobei mindestens eine Eigenschaft des Satzes der Simulationsszenarien bestimmt (S6) wird, und wobei modifizierte Simulationsszenarien zu dem Satz der Simulationsszenarien hinzugefügt werden, bis die gewünschte Eigenschaft erfüllt ist.

5. Verfahren nach Anspruch 4, wobei das Bestimmen (S6) der Eigenschaft des Satzes von Simulationsszenarien das Analysieren jedes modifizierten Simulationsszenarios unter Verwendung mindestens eines neuronalen Netzes und/oder das Ausführen mindestens einer Simulation des modifizierten Simulationsszenarios umfasst.

6. Verfahren nach Anspruch 4 oder 5, wobei die Eigenschaft mit mindestens einem Merkmal der Simulationsszenarien zusammenhängt, und wobei der Satz von Simulationsszenarien erweitert wird, um eine gewünschte statistische Verteilung der Simulationsszenarien zu erhalten.

7. Verfahren nach einem der vorhergehenden Ansprüche, wobei das Exportieren (S7) des Simulationsszenarios umfasst
Empfangen einer gewünschten Sensorkonfiguration,
Erzeugen von simulierten Sensordaten basierend auf dem Simulationsszenario sowie der gewünschten Sensorkonfiguration, und
Exportieren der simulierten Sensordaten.

8. Verfahren nach Anspruch 7, ferner umfassend den Schritt
Trainieren eines neuronalen Netzes für die Perzeption mittels der simulierten Sensordaten und/oder
Testen (S8) einer autonomen Fahrfunktion mittels der simulierten Sensordaten.

9. Verfahren nach Anspruch 7 oder 8, wobei die empfangenen Rohdaten eine geringere Auflösung als die simulierten Sensordaten aufweisen.

10. Verfahren nach einem der Ansprüche 7 bis 9, wobei die simulierten Sensordaten eine Vielzahl von Kamerabildern umfassen.

11. Computerlesbarer Datenträger, der Anweisungen enthält, die, wenn sie von einem Prozessor eines Computersystems ausgeführt werden, das Computersystem veranlassen, ein Verfahren nach einem der vorhergehenden Ansprüche auszuführen.

12. Computersystem, umfassend einen Prozessor, eine Mensch-Maschine-Schnittstelle und einen nichtflüchtigen Speicher, wobei der nichtflüchtige Speicher Befehle enthält, die, wenn sie von dem Prozessor ausgeführt werden, das Computersystem veranlassen, ein Verfahren nach einem der Ansprüche 1 bis 10 auszuführen.

## Claims

1. A computer-implemented method for generating a simulation scenario for a vehicle, comprising the steps of
receiving raw data, the raw data comprising a plurality of consecutive LIDAR point clouds, a plurality of consecutive camera images, and a plurality of consecutive velocity and/or acceleration data,
localizing and classifying (S4) one or more dynamic road users within the plurality of consecutive LIDAR point clouds and generating trajectories for the road user(s),
creating (S5) a simulation scenario, and
exporting (S7) the simulation scenario, **characterized by** the steps of
merging (S1) the plurality of consecutive LIDAR point clouds of a specified region in a common coordinate system to generate a composite point cloud,
localizing and classifying (S2) one or more static objects within the composite point cloud,
generating (S3) road information based on the composite point cloud, one or more static objects, and at least one camera image,
wherein the simulation scenario is created based on the one or more static objects, the road information, and the trajectories created for the one or more road users.

2. The method according to claim 1, further comprising the step of modifying (S9) the simulation scenario, in particular by modifying at least one trajectory and/or adding at least one further dynamic road user, before exporting (S7) the simulation scenario .

3. The method according to claim 2, wherein the steps of modifying (S9) the simulation scenario and exporting (S7) the simulation scenario are repeated, and wherein before exporting (S7) the simulation scenario, a different modification is applied in each case so that a set of simulation scenarios is compiled.

4. The method according to claim 3, wherein at least one property of the set of simulation scenarios is determined (S6), and wherein modified simulation scenarios are added to the set of simulation scenarios until the desired property is satisfied.

5. The method according to claim 4, wherein determining (S6) the property of the set of simulation scenarios comprises analyzing each modified simulation scenario using at least one neural network and/or performing at least one simulation of the modified simulation scenario.

6. The method according to claim 4 or 5, wherein the property is related to at least one feature of the simulation scenarios, and wherein the set of simulation scenarios is extended to obtain a desired statistical distribution of the simulation scenarios.

7. The method according to any one of the preceding claims, wherein exporting (S7) the simulation scenario comprises
receiving a desired sensor configuration,
generating simulated sensor data based on the simulation scenario and the desired sensor configuration, and
exporting the simulated sensor data.

8. The method according to claim 7, further comprising the step of
training a neural network for perceiving using the simulated sensor data, and/or
testing (S8) an autonomous driving function using the simulated sensor data.

9. The method according to claim 7 or 8, wherein the received raw data has a lower resolution than the simulated sensor data.

10. The method according to any one of claims 7 to 9, wherein the simulated sensor data comprises a plurality of camera images.

11. A computer readable medium comprising commands which, when executed by a processor of a computer system, cause the computer system to perform a method according to any one of the preceding claims.

12. A computer system comprising a processor, a human-machine interface, and a non-volatile memory, wherein the non-volatile memory contains commands which, when executed by the processor, cause the computer system to perform a method according to any one of claims 1 to 10.

## Revendications

1. Procédé mis en œuvre par ordinateur pour générer un scénario de simulation pour un véhicule, comprenant les étapes suivantes:
recevoir des données brutes, les données brutes comprenant une pluralité de nuages de points LIDAR successifs, une pluralité d'images de caméra successives et une pluralité de données de vitesse et/ou d'accélération successives,
localiser et classer (S4) un ou plusieurs usagers de la route dynamiques à l'intérieur de la pluralité de nuages de points LIDAR successifs et générer des trajectoires pour le ou les usagers de la route,
créer (S5) un scénario de simulation, et
exporter (S7) le scénario de simulation, **caractérisé par** les étapes suivantes:
fusionner (S1) la pluralité de nuages de points LIDAR successifs d'une région déterminée dans un système de coordonnées commun afin de produire un nuage de points composite,
localiser et classer (S2) un ou plusieurs objets statiques à l'intérieur du nuage de points composite,
générer (S3) des informations routières sur la base du nuage de points composite, d'un ou plusieurs objets statiques et d'au moins une image de caméra,
le scénario de simulation étant établi sur la base dudit ou desdits objets statiques, des informations routières et des trajectoires générées pour ledit ou lesdits usagers de la route.

2. Procédé selon la revendication 1, comprenant en outre l'étape consistant à modifier (S9) le scénario de simulation, en particulier en modifiant au moins une trajectoire et/ou en ajoutant au moins un usager de la route dynamique supplémentaire, avant d'exporter (S7) le scénario de simulation.

3. Procédé selon la revendication 2, les étapes consistant à modifier (S9) le scénario de simulation et à exporter (S7) le scénario de simulation étant répétées, et une modification différente étant appliquée à chaque fois avant l'exportation (S7) du scénario de simulation, de sorte qu'un ensemble de scénarios de simulation est assemblé.

4. Procédé selon la revendication 3, au moins une propriété de l'ensemble des scénarios de simulation étant déterminée (S6), et des scénarios de simulation modifiés étant ajoutés à l'ensemble des scénarios de simulation jusqu'à ce que la propriété souhaitée soit satisfaite.

5. Procédé selon la revendication 4, la détermination (S6) de la propriété de l'ensemble de scénarios de simulation comprenant l'analyse de chaque scénario de simulation modifié par utilisation d'au moins un réseau neuronal et/ou l'exécution d'au moins une simulation du scénario de simulation modifié.

6. Procédé selon la revendication 4 ou 5, la propriété étant en rapport avec au moins une caractéristique des scénarios de simulation, et l'ensemble de scénarios de simulation étant élargi afin d'obtenir une distribution statistique souhaitée des scénarios de simulation.

7. Procédé selon l'une des revendications précédentes, l'exportation (S7) du scénario de simulation comprenant les étapes suivantes:
recevoir une configuration de capteur souhaitée, générer des données de capteur simulées sur la base du
scénario de simulation ainsi que de la configuration de capteur souhaitée, et exporter les données de capteurs simulées.

8. Procédé selon la revendication 7, comprenant en outre l'étape suivante:
entraîner un réseau neuronal pour la perception au moyen des données de capteurs simulées et/ou
tester (S8) une fonction de conduite autonome à l'aide des données de capteurs simulées.

9. Procédé selon la revendication 7 ou 8, les données brutes reçues ayant une résolution inférieure à celle des données de capteur simulées.

10. Procédé selon l'une des revendications 7 à 9, les données de capteur simulées comprenant une pluralité d'images de caméra.

11. Support de données lisible par ordinateur, qui contient des instructions qui, lorsqu'elles sont exécutées par un processeur d'un système informatique, amènent le système informatique à mettre en œuvre un procédé selon l'une des revendications précédentes.

12. Système informatique, comprenant un processeur, une interface homme-machine et une mémoire non volatile, la mémoire non volatile contenant des instructions qui, lorsqu'elles sont exécutées par le processeur, amènent le système informatique à mettre en œuvre un procédé selon l'une des revendications 1 à 10.
